**Europäisches Patentamt**

**European Patent Office**

**Office européen des brevets**

(19)

(11) Veröffentlichungsnummer: **0 295 471 B1**

(12) **EUROPÄISCHE PATENTSCHRIFT**

(45) Veröffentlichungstag der Patentschrift: **30.06.93**

(51) Int. Cl.5: **B01J 29/08**, //C10G11/05

(21) Anmeldenummer: **88108447.9**

(22) Anmeldetag: **27.05.88**

(54) **Verfahren zum Einbau von Silicium-Atomen anstelle von Aluminiumatomen im Kristallgitter eines Zeolithen des Faujasit-Typs.**

(30) Priorität: **06.06.87 DE 3719049**

(43) Veröffentlichungstag der Anmeldung:
**21.12.88 Patentblatt 88/51**

(45) Bekanntmachung des Hinweises auf die
Patenterteilung:
**30.06.93 Patentblatt 93/26**

(84) Benannte Vertragsstaaten:
**AT BE CH DE ES FR GB GR IT LI NL SE**

(56) Entgegenhaltungen:
**EP-A- 0 100 544**
**US-A- 3 980 586**
**US-A- 4 402 867**

(73) Patentinhaber: **Akzo N.V.**
**Postbus 186 Velperweg 76**
**NL-6800 LS Arnhem(NL)**

(72) Erfinder: **Gimpel, Moritz, Dr.**
**Am Tiefental 28**
**W-8753 Obernburg(DE)**
Erfinder: **Roelofsen, Jan Willem, Dr.**
**Lange Voort 239**
**NL-2343 CE Oegstgeest(NL)**

(74) Vertreter: **Fett, Günter**
**Akzo Patente GmbH Kasinostrasse 19 - 23**
**W-5600 Wuppertal 1 (DE)**

EP 0 295 471 B1

**Beschreibung**

Die Erfindung betrifft sowohl ein Verfahren zum Einbau von Silicium-Atomen anstelle von Aluminiumatomen im Kristallgitter eines Zeolithen des Faujasit-Typs durch Behandlung mit einem Halogensilan bei erhöhter Temperatur als auch dessen Verwendung als Crackkatalysator.

Unter Zeolithen werden im allgemeinen Alkali- bzw. Erdalkali-Aluminiumsilikate der allgemeinen Formel

$$M_{2/n}O \bullet Al_2O_3 \bullet y\ SiO_2 \bullet z\ H_2O$$

verstanden, wobei M ein ein- oder mehrwertiges Metall, H, [$NH_4$], [$CH_3 - NH_3$]usw. ist und n deren Wertigkeit angibt. y liegt zwischen 1, 8 und ca. 12 und z zwischen 0 und 9. Ihr Kristallgitter besteht aus Kubooktaedern mit Eckpunkten aus $SiO_2$- und $AlO_4$-Tetraedern. Charakteristisch ist, daß sie ein System gleichgebauter Hohlräume mit untereinander gleichgroßen Porenöffnungen bilden.

Die Zeolithe werden u.a. zur selektiven Absorption sowie für katalytische Prozesse eingesetzt. In der Petrochemie dienen sie z.B. zum Trennen von isomeren Kohlenwasserstoffen sowie als Katalysator beim Hydrieren, Isomerisieren und Kracken von Kohlenwasserstoffen. Für diesen Bereich sind synthetische Zeolithe des Faujasit-Typs besonders wichtig. Als Katalysatoren werden hauptsächlich der Zeolith X mit y = 2 - 3 und der Zeolith Y mit y = 3 - ca. 50 eingesetzt.

Das $SiO_2/Al_2O_3$-Verhältnis wird im wesentlichen bei der Herstellung des Zeolithen festgelegt. Seine nachträgliche Veränderung ist nur in eng begrenztem Maße möglich, ohne daß dabei andere Eigenschaften wie vor allem die Kristallinität darunter leiden. Für manche Einsatzgebiete möchte man das Verhältnis aber möglichst weit ändern, da damit positive Effekte verbunden sind; so gelten kieselsäurereichere Zeolithe als beständiger gegen hohe Temperaturen und Säuren. Außerdem beeinflussen sie die Selektivität bei ihrer Verwendung in Katalysatoren.

Es wurde daher intensiv daran gearbeitet, das Molverhältnis von Silicium zu Aluminium zu erhöhen.

So sind folgende Dealuminierungsverfahren bekannt: Wasserdampfbehandlung bei hoher Temperatur von z.B. 700 °C (siehe US-A-3 591 488), Kalzinierung von $NH_4Y$-Zeolithen, Extraktion mit Chelatbildnern wie EDTA, Acetylacetonat, etc. (siehe DE-A-1 467 149 und DE-A-20 61 285), Auslaugen mit Säuren und Basen (siehe DD-A-121 331) und Reaktionen mit Halogen oder Säuren in der Gasphase z.B. $F_2$, $Cl_2$, HCl .. .

Es gab auch Versuche, das Aluminium durch Silicium zu ersetzen. Dazu wurden Siliciumverbindungen wie $SiCl_4$, $SiF_4$, $(NH_4)_2SiF_6$ etc. eingesetzt.

Hermann K. Beyer und Ita Belenykaja beschreiben in "Catalysis by Zeolites", 1980 Elsevier, Amsterdam, Seite 203 ff die Herstellung eines hochkristallinen Zeolithen des Faujasit-Typs, wobei sie im wesentlichen zunächst eine Reaktion mit gasförmigem $SiCl_4$ zwischen 730 und 830 °K und dann eine Wäsche mit Wasser angeben. Die Reaktion beginnt offensichtlich erst bei 730 °K.

In der EP-A 2-72 397 wurde ein Verfahren zur Herstellung von ultrastabilen Zeolithen des Y-Typs durch thermische Dealuminierung von aktivierten Zeolithen des Y-Typs unter Verwendung von gasförmigen Halogensilanen unter Ausschluß von Feuchtigkeit beschrieben, wobei die aktivierten Zeolithe bei Temperaturen von 150 - 450 °C, vorzugsweise bei 200 - 400 °C, insbesondere zwischen 250 und 380 °C umgesetzt werden sollen.Das Reaktionsprodukt wird bis zur Halogenfreiheit mit Wasser ausgewaschen. In den bevorzugten Temperaturbereichen werden Zeolithe mit Zellkonstanten $a_o$ von 2,442 bis 2,423 nm und $SiO_2/Al_2O_3$-Verhältnisse von 7 bis 39 erhalten. Zur Kristallinität wird nichts gesagt.

In der EP-B1-82 211 wird ein Verfahren zum Einbau von Siliciumatomen in das Kristallgitter eines Aluminiumzeolithen bei Temperaturen zwischen 20 und 95 °C durch Reaktion mit einem Fluorosilikatsalz beschrieben. Nachteilig dabei ist, daß vor der Dealuminierung die Na-Ionen gegen $NH_4$-Ionen ausgetauscht werden müssen, daß wegen der pH-Konstanz eine aufwendige Kontrolle notwendig ist und daß der Umgang mit Fluoridverbindungen wegen Korrosion, Giftigkeit und Umweltschutz problematisch ist.

In der EP-A1-62 123 wird ein Verfahren zur Entaluminierung von Aluminosilikaten mit anorganischen Halogeniden, wie z.B. $SiCl_4$, bei erhöhter Temperatur, die zur Verflüchtigung der gebildeten Al-Verbindungen ausreicht, beschrieben. Wenn das Halogen Cl ist, liegt die Temperatur vorzugsweise zwischen 140° und 760 °C. In den Beispielen wird bei 540 °C gearbeitet. Dabei dauert das Entfernen der Reaktionsprodukte 1 bis 7 Tage.

In der US-A-3,644,220 wird ein Verfahren zur Behandlung von kristallinen Zeolithen unter weitgehender Erhaltung ihrer Kristallinität beschrieben, wobei man die Zeolithe mit flüchtigen Halogenverbindungen u.a. von Silicium bei erhöhter Temperatur, insbesondere bei 200 bis 650 °C (400 - 1200 °F), reagieren läßt und sie dann mit Wasser oder wäßrigem Ammoniumhydroxid wäscht.

Der Erfindung liegt die Aufgabe zugrunde, ein neues Verfahren zur Herstellung von Zeolithen des Faujasit-Typs bereitzustellen, wobei die Nachteile der bekannten Verfahren vermieden und vor allem neue

2

Zeolithe mit besonderen katalytischen Eigenschaften wie Aktivität, Selektivität und Stabilität gegen Säuren und Temperaturen erhalten werden.

Die erfindungsgemäße Lösung ist den Patentansprüchen zu entnehmen.

Das erfindungsgemäße Verfahren besteht darin, daß man einen aktivierten kristallinen Zeolithen des Faujasit-Typs mit einem Halogensilan bei erhöhter Temperatur reagieren läßt und das Reaktionsgemisch anschließend wäscht, dabei beträgt die erhöhte Temperatur kennzeichnungsgemäß weniger als 150°C.

Als Ausgangsmaterial werden Zeolithe des Faujasit-Typs, insbesondere des Y-Typs mit ein- oder mehrwertigen Kationen eingesetzt, wobei auch $NH_4^\oplus$ und auch ein Gemisch von Kationen gemeint sind. Bevorzugt wird der Na-Y-Typ. Zur Aktivierung werden die Zeolithe bei ca. 400°C bis zu einem Wassergehalt von unter 2 Gew.-% getrocknet. Bei allen folgenden Verfahrensschritten ist strengstens auf den Ausschluß von Feuchtigkeit zu achten, und zwar bis zur Wäsche mit Wasser. Die Kristallinität der Ausgangsmaterialien beträgt mindestens 80%.

Das erfindungsgemäße Verfahren läßt sich vorteilhafterweise auch auf Zusammensetzungen von Zeolithen des Faujasit-Typs mit Kieselgel, amorphem Aluminosilikat und/oder Ton als Matrix anwenden. Die so erhaltenen erfindungsgemäßen Zusammensetzungen können direkt z.B. als Crackkatalysatoren eingesetzt werden.

Unter Halogensilanen sind halogenhaltige Derivate von Silanen zu verstehen, also fluor-, chlor- oder bromhaltige Silane, die auch noch mit organischen Gruppen, wie Alkylgruppen, substituiert sein können. Bevorzugt werden Chlorsilane wie Trimethylchlorsilan, Dimethyldichlorsilan und Trichlormethylsilan, insbesondere Siliciumtetrachlorid. Das Halogensilan wird gasförmig - gegebenenfalls mit einem Trägergas verdünnt -verwendet. Die Konzentration kann in weiten Grenzen variieren, so kann das Verhältnis der Volumina von Trägergas zu Halogensilan von 0,01 bis 100 reichen.

Die Reaktion dauert in der Regel ca. 2 Stunden. Sie wird vorteilhafterweise in einem Wirbelbett- oder Rührbettreaktor durchgeführt. Aber auch ein Drehrohrreaktor kann verwendet werden. Die Reaktionstemperatur beträgt vorteilhafterweise 80 bis 120°C. Es ist zweckmäßig,mit einem Temperaturgradienten zu fahren, wobei man mit der niedrigen Temperatur evtl. sogar mit Raumtemperatur beginnt.

Nach der Reaktion läßt man auf Raumtemperatur abkühlen.

Das Reaktionsgemisch wird nun gewaschen. Das wird zweckmäßigerweise mit einer Pufferlösung, z.B. mit Natriumacetat oder mit Ammoniumsulfat geschehen. Vorteilhaft ist es aber, das Reaktionsgemisch zunächst mit einer nichtwäßrigen Flüssigkeit wie Aceton oder Alkohol zu behandeln. Ganz besonders gut eignet sich Äthanol und Methanol. Das Waschen kann durch Aufkochen in der Flüssigkeit beschleunigt werden.

Das Reaktionsprodukt wird schließlich mit Wasser halogenfrei gewaschen und bei 100°C getrocknet.

Die nach dem erfindungsgemäßen Verfahren herstellbaren Zeolithe haben folgende Eigenschaften: Ihre Kristallinität beträgt 80% und mehr, insbesondere 85 bis 95%, ihre Zellkonstante $a_o$ 2,448 bis 2,465, insbesondere 2,450 bis 2,455 nm.

Eigenartig ist auch ihre Porosität. Die erfindungsgemäß hergestellten Zeolithe zeigen keine meso-Porenstruktur (2,0 -10,0 nm Porendurchmesser).

Auch die geringe Bandbreite der IR- und NMR-Spektren ist typisch für die erfindungsgemäßen Zeolithe.

Die Zeolithe wurden entsprechend der EP-A-112 601 zu Crackkatalysatoren weiterverarbeitet. Ihre Eigenschaften wurden u.a. anhand des Mikro-Aktivity-Test, wie er in der EP-A-112 601 und im Bericht über das Symosium von 25. bis 30. Mai 1982 in Amsterdam (NL) auf den Seiten FCC/80-84 beschrieben ist, geprüft und erwiesen sich als überraschend gut.

Die Eigenschaften der erfindungsgemäß hergestellten Zeolithe wurden nach folgenden Meßmethoden bestimmt: Die Kristallinität wurde röntgenographisch nach der Methode von P.H. Hermans et al. bestimmt (siehe "Röntgenographische Kristallinitätsbestimmung bei Hochpolymeren" in Experienta, Vol. XIX, Fasc. 11, Seiten 553 - 564 (1963).

Die Zellkonstante $a_o$ wurde aus mehreren Reflexen des Röntgenbeugungsspektrums nach der ASTH-Methode D 3942/80 bestimmt und entspricht der Kantenlänge einer würfenförmigen Elementarzelle.

Die BET-3-Parameter-Methode wird in "Adsorption, Surface Area and Porosity" (Academic Press, 1982) von S.J. Gregg und K.S.W. Sing)auf Seite 45 beschrieben.

Die Reaktionstemperatur wurde direkt in der Reaktionsphase bestimmt.

Die erfindungsgemäß erhaltenen Erzeugnisse haben folgende Vorteile:

Sie haben hervorragende Katalysatoreigenschaften wie Ultrastabilität (d.h. weitgehender Kristallisationserhalt nach dem Steamen) und gute Aktivität. Insbesondere die Ultrastabilität war nicht zu erwarten. Da weder die Anforderung nach einem Schrumpf der Einheitszelle von 1 - 1,5% (s. Mc Daniel und Maher in Soc. Chem. Ind. (1968) "Molecular Sieves", Seite 186), noch die Anforderung nach einer Zellkonstante $a_o$ von weniger als 2,45 (s. EP-A-0 134 849 sowie US-A-3,293,192, 3,402,996 und Mc. Daniel und Maher, Monograph Molecular Sieves (1968) Seite 186, Society of Chemical Engineering) erfüllt sind.

Außerdem gibt es noch folgende Vorteile: Der erfindungsgemäß hergestellte Zeolith läßt sich ökonomisch herstellen, da die relativ geringen Dealuminierungsgrade mit entsprechend wenig $SiCl_4$-Einsatz erzielt werden, wegen der niedrigen Reaktionstemperatur Energie gespart wird und schließlich proportional zur Kristallinität auch die Ausbeute an katalytisch aktivem Material steigt.

Beispiel 1

20 g eines Na-Y-Zeolithen wurden bei 400 °C 2 Stunden lang getrocknet, unter Feuchtigkeitsausschluß abgekühlt und in 200 ml getrocknetem (Molekularsieb 4 Å) Tetrachloräthylen suspendiert. Nach Zugabe von 25 ml $SiCl_4$ wurde 2 Stunden lang unter Rückfluß gekocht (121 °C), wobei ein $N_2$-Strom durch die Suspension geleitet wurde. Nach dem Abkühlen und Abfiltrieren wurde zweimal mit Methanol gespült und einmal aufgekocht. Schließlich wurde mit Wasser chloridfrei gewaschen.

Die Zellkonstante $a_o$ betrug 2,460 nm, die Kristallinität: 83%.

Beispiel 2

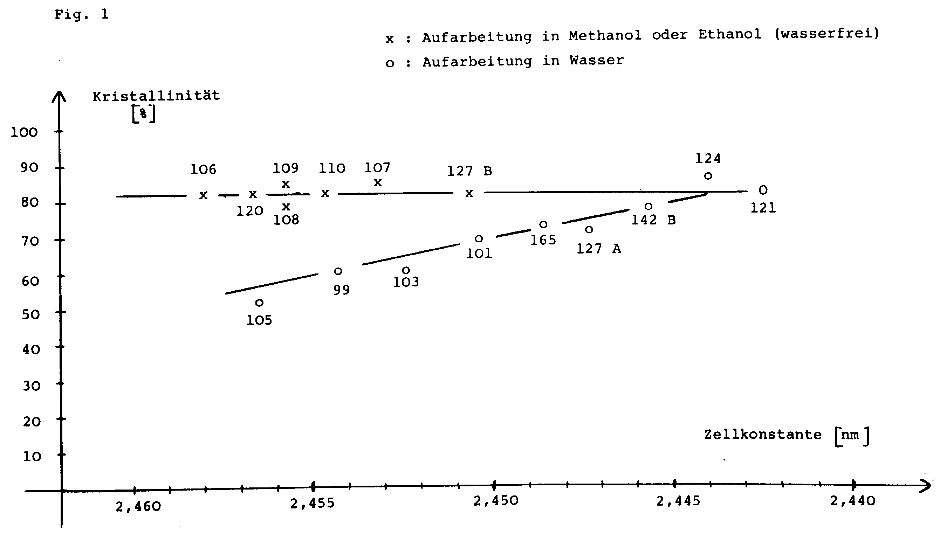

Wie in Beispiel 1 wurden im Drehrohr entsprechend den in der folgenden Tabelle angegebenen Reaktionsbedingungen Zeolithe hergestellt, deren Zellkonstante $a_o$ und Kristallinität sowohl in der Tabelle als auch in Fig. 1 wiedergegeben werden.

| Vers. Nr. | Reaktionstemp. °C | Aufarbeitg. | $a_o$ nm | Kristallinität % |
|-----------|-------------------|-------------|----------|------------------|
| 106 | 100 | Methanol | 2,458 | 84 |
| 120 | 100 | Ethanol | 2,457 | 81 |
| 109 | 100 | Methanol | 2,456 | 86 |
| 108 | 100 | Methanol | 2,456 | 79 |
| 110 | 100 | Methanol | 2,455 | 82 |
| 107 | 100 | Methanol | 2,453 | 86 |
| 127 B | 140 | Ethanol | 2,451 | 80 |
| 124 | 350 | $H_2O$ | 2,444 | 87 |
| 121 | 350 | $H_2O$ | 2,442 | 81 |
| 105 | 100 | $H_2O$ | 2,457 | 53 |
| 99 | 100 | $H_2O$ | 2,455 | 60 |
| 103 | 100 | $H_2O$ | 2,453 | 62 |
| 101 A | 145 | $H_2O$ | 2,451 | 70 |
| 165 | 150 | $H_2O$ | 2,449 | 72 |
| 127 A | 140 | $H_2O$ | 2,448 | 73 |
| 142 B | 250 | $H_2O$ | 2,446 | 79 |

Beispiel 3

120 g eines NaY-Zeolithen ($a_o$ = 2,467 nm, Kristallinität = 91%, $Na_2O$ = 13,7%, $Al_2O_3$ = 21,7%, $SiO_2$ = 63,0%) wurden im Drehrohrreaktor bei 380 °C aktiviert, 2 h lang mit 13 l $N_2$/h und 3,5 g $SiCl_4$/l $N_2$ behandelt (Temperaturen siehe Tabelle ), auf Raumtemperatur abgekühlt und geteilt: Eine Hälfte wurde gemäß EP-A-72 397 in $H_2O$ chloridfrei gewaschen, die andere Hälfte wurde erfindungsgemäß behandelt, d.h. zweimal mit wasserfreiem Ethanol gespült, 1 h in wasserfreiem Ethanol am Rückfluß gekocht, und dann mit $H_2O$ chloridfrei gewaschen. Die Proben wurden bei 100°C getrocknet und analysiert.

Tabelle

| | Reaktions-temp. °C | $H_2O$ | | Produkteigenschaften nach Aufarbeitung in 1. Ethanol, 2. $H_2O$ | |
|---|---|---|---|---|---|
| | | Gitterkonst. nm | Krist. % | Gitterkonst. nm | Krist. % |
| a) | 140 | 2,448 | 73 | 2,451 | 80 |
| b) | 100 | 2,454 | 55 | 2,455 | 82 |
| c) | 20 | 2,450 | 26 | 2,456 | 57 |

Von der Probe b wurden 4 Ansätze a 120 g hergestellt, in Ethanol aufgearbeitet und wie folgt analysiert: $a_o$ = 2,455 nm, Kristallinität = 82%, $Al_2O_3$ = 14,9%, $SiO_2$ = 56,4%, $SiO_2/Al_2O_3$ = 3,8 (nach Elementaranalyse).

Der $Al_2O_3$-Gehalt aufgrund der Elementaranalyse gibt die Summe aus kristallinem und amorphen $Al_2O_3$ an, wobei letzteres erst bei der Reaktion bzw. bei der Aufarbeitung erzeugt wurde. Die Zellkonstante ist ein besseres Maß für den Einbau von Siliciumatomen anstelle von Aluminiumatomen im Kristallgitter; entsprechend der Kurve von Breck Flaniger entspricht die Zellkonstante von 2,455 nm ungefähr einem $SiO_2/Al_2O_3$-Verhältnis von 7,0 - 7,5 im Kristallgitter.

Micro-Activity-Tests mit der Probe b) zeigten die für ultrastabile Zeolithe typische thermische Stabilität, d.h. eine Steambehandlung bei 795°C zerstört den Katalysator nicht Die Crackeigenschaften sind sehr gut, insbesondere wenn der Na-Gehalt durch einen seltenen Erden-Ionenaustausch erniedrigt wurde. Der Micro-Activity-Test ist in der EP-A-112 601 beschrieben.

Beispiel 4

Gas-Feststoffreaktionen werden vorteilhafter im Wirbelbettreaktor durchgeführt. Eine breite, sich während des Versuchs laufend ändernde Korngrößenverteilung des Zeolithen bereitet Probleme bei der Reaktionsführung; deshalb wurde ein gerührte Wirbelbettreaktor benutzt.

Unter entsprechenden Bedingungen wie im Beispiel 3 wurden bei ca. 140°C folgende Produkte erhalten:

  a) 2,460 nm, 91% Kristallinität
  b) 2,454 nm, 90% Kristallinität.

Patentansprüche

1. Verfahren zum Einbau von Siliciumatomen anstelle von Aluminiumatomen im Kristallgitter eines Zeolithen durch Reaktion eines aktivierten kristallinen Zeolithen des Faujasit-Typs mit einem gasförmigen Halogensilan bei erhöhter Temperatur und anschließender Wäsche, dadurch gekennzeichnet, daß die Reaktionstemperatur im Bereich zwischen 80 und 150°C liegt und die Wäsche des Reaktionsgemisches zunächst mit nichtwäßrigen Flüssigkeiten erfolgt, sei es durch Verdrängen, Lösen, Extrahieren oder Reagieren, insbesondere mit Alkoholen, vor allem mit Äthanol oder Methanol, und dann mit Wasser.

2. Verfahren nach Anspruch 1, dadurch gekennzeichnet, daß der Zeolith ein Zeolith des Y-Typs mit folgender allgemeiner Formel

$$M_{2/n}O \cdot Al_2O_3 \cdot y\, SiO_2 \cdot z\, H_2O$$

ist, wobei M ein ein- oder zweiwertiges Kation, insbesondere $Na^+$, darstellt, n seine Wertigkeit angibt, y ein Zahlenwert von 3 bis 6 ist und z von 0 bis 9 reicht.

**3.** Verfahren nach Anspruch 1 oder 2, dadurch gekennzeichnet, daß das Halogensilan ein Chlorsilan, insbesondere Siliciumtetrachlorid ist.

**4.** Verfahren nach einem oder mehreren der Ansprüche 1 bis 3, dadurch gekennzeichnet, daß die Reaktionstemperatur unter 120 °C liegt.

**5.** Zeolith, erhältlich nach einem Verfahren gemäß einem oder mehreren der Ansprüche 1 bis 4 mit einer Kristallinität von 80% und mehr, insbesondere von 85 bis 95%, und einer Zellkonstante $a_o$ von 2,450 - 2,465, insbesondere von 2,453 bis 2,460 nm.

**6.** Verwendung der nach einem oder mehreren der Ansprüche 1 bis 4 hergestellten Zeolithe zur Umwandlung von Kohlenwasserstoffen, insbesondere zum Cracken.

## Claims

**1.** A process for the incorporation of silicon atoms in place of aluminium atoms in the crystal lattice of a zeolite by the reaction of an activated crystalline zeolite of the Faujasite type with a gaseous halogen silane at elevated temperature followed by washing, characterised in that the reaction temperature is in the range of from 80 to 150 °C and washing of the reaction mixture is first carried out with non-aqueous liquids by displacement, solution, extraction or reaction, in particular with alcohols, above all with ethanol or methanol, and then with water.

**2.** A process according to Claim 1, characterised in that the zeolite is a zeolite of the Y-type corresponding to the following general formula

$$M_{2/n}O \cdot Al_2O_3 \cdot y\ SiO_2 \cdot z\ H_2O$$

wherein M denotes a monovalent or divalent cation, in particular $Na^+$, n denotes its valency, y denotes a value from 3 to 6 and z extends from 0 to 9.

**3.** A process according to Claim 1 or 2, characterised in that the halogenosilane is a chlorosilane, in particular silicon tetrachloride.

**4.** A process according to one or more of claims 1 to 3, characterised in that the reaction temperature is below 120 °C.

**5.** A zeolite obtainable by a process according to one or more of Claims 1 to 4 having a crystallinity of 80% or more, in particular from 85 to 95%, and a cell constant $a_o$ of from 2.450 - 2.465, in particular from 2.453 to 2.460 nm.

**6.** Use of the zeolites prepared according to one or more of Claims 1 to 4 for the conversion of hydrocarbons, in particular for cracking.

## Revendications

**1.** Procédé pour incorporer des atomes de silicium, à la place d'atomes d'aluminium, dans le réseau cristallin d'une zéolithe, par réaction d'une zéolithe cristalline activée, du type faujasite, avec un halogénosilane gazeux, à température élevée, et lavages ultérieurs, procédé caractérisé en ce que la température de réaction se situe entre 80 °C et 150 °C et en ce que les lavages du mélange réactionnel sont effectués d'abord avec des liquides non-aqueux, que ce soit par déplacement, dissolution, extraction ou réaction, en particulier avec des alcools, surtout avec de l'éthanol ou du méthanol, et ensuite avec de l'eau.

**2.** Procédé selon la revendication 1, caractérisé en ce que la zéolithe est une zéolithe du type Y, correspondant à la formule générale suivante :

EP 0 295 471 B1

$$M_{2/n}O \cdot Al_2O_3 \cdot y\ SiO_2 \cdot z\ H_2O$$

dans laquelle M représente un cation monovalent ou divalent, en particulier $Na^+$, n indique la valence de ce cation, y représente un nombre valant de 3 à 6 et z vaut de 0 à 9.

3. Procédé selon la revendication 1 ou 2, caractérisé en ce que l'halogénosilane est un chlorosilane, et en particulier du tétrachlorure de silicium.

4. Procédé selon l'une ou plusieurs des revendications 1 à 3, caractérisé en ce que la température de réaction vaut moins de 120°C.

5. Zéolithe que l'on peut obtenir par un procédé conforme à l'une ou plusieurs des revendications 1 à 4, et qui présente un taux de cristallinité de 80 % ou plus, en particulier de 85 % à 95 %, et une constante de maille $a_o$ de 2,450 à 2,465 nm et en particulier de 2,453 à 2,460 nm.

6. Utilisation d'une zéolithe préparée selon l'une ou plusieurs des revendications 1 à 4, pour transformer des hydrocarbures et en particulier pour un craquage.

7

EP 0 295 471 B1

Fig. 1

x : Aufarbeitung in Methanol oder Ethanol (wasserfrei)

o : Aufarbeitung in Wasser

Kristallinität [%]

Zellkonstante [nm]